# EUROPÄISCHE PATENTANMELDUNG

(11) **EP 0 965 486 A2**
(43) Veröffentlichungstag der Anmeldung: **22.12.1999**
(21) Anmeldenummer: 99102986.9
(22) Anmeldetag: 15.02.1999
(51) Int. Cl.: B60Q 1/04

(54) **Vorrichtung zur Befestigung einer Beleuchtungseinrichtung an einem Fahrzeugteil**

(30) Priorität: 19.06.1998 DE 29810988 U
(71) Anmelder: ROBERT BOSCH GMBH, 70442 Stuttgart (DE)
(72) Erfinder: Schmickl, Klaus, 72760 Reutlingen (DE); Schoenettin, Dietmar, 85120 Hepberg (AT)

(57) **Zusammenfassung**

An der Beleuchtungseinrichtung (10) ist ein Verriegelungselement (30) zwischen einer Entriegelungsstellung und einer Verriegelungsstellung verschiebbar angeordnet. An der Beleuchtungseinrichtung (10) ist außerdem ein Betätigungselement (58) verdrehbar angeordnet, das über einen exzentrisch an diesem angeordneten Finger (69) mit dem Verriegelungselement (30) gekoppelt ist, so daß eine Drehbewegung des Betätigungselements (58) in eine Verschiebung des Verriegelungselements (30) umgewandelt wird. Am Fahrzeugteil (12) ist ein Zapfen (20) angeordnet, an dem das Verriegelungselement (30) zur Befestigung der Beleuchtungseinrichtung (10) verriegelbar ist. Durch das Betätigungselement (58) wird ermöglicht, daß das Verriegelungselement (30) auch an einem Zapfen (20) verriegelt werden kann, der nicht direkt zugänglich ist.

## Beschreibung

### Stand der Technik

Die Erfindung geht aus von einer Vorrichtung zur Befestigung einer Beleuchtungseinrichtung an einem Fahrzeugteil nach der Gattung des Anspruchs 1.

Eine solche Vorrichtung ist durch die DE 195 19 651 A1 bekannt. Diese Vorrichtung weist ein am Fahrzeugteil angeordnetes Halteelement auf. An der Beleuchtungseinrichtung ist ein Verriegelungselement zwischen einer Entriegelungsstellung und einer Verriegelungsstellung bewegbar angeordnet. Die Beleuchtungseinrichtung ist in einer Montagerichtung mit dem Verriegelungselement in dessen Entriegelungsstellung am Fahrzeugteil ansetzbar. Nachfolgend ist das Verriegelungselement in seine Verriegelungsstellung bewegbar, wobei dieses am Halteelement des Fahrzeugteils verriegelt, so daß die Beleuchtungseinrichtung am Fahrzeugteil gehalten ist. Nachteilig bei dieser bekannten Vorrichtung ist, daß das Verriegelungselement selbst direkt zugänglich sein muß, um dieses am Halteelement des Fahrzeugteils zu verriegeln bzw. zu entriegeln, was bei beengten Einbauverhältnissen der Beleuchtungseinrichtung nicht immer möglich ist, so daß die Anordnung des Halteelements schwierig ist.

### Vorteile der Erfindung

Die erfindungsgemäße Vorrichtung zur Befestigung einer Beleuchtungseinrichtung an einem Fahrzeugteil mit den Merkmalen gemäß Anspruch 1 hat demgegenüber den Vorteil, daß das Verriegelungselement zu dessen Ver- und Entriegelung am Halteelement nicht direkt zugänglich zu sein braucht, da dessen Bewegung zwischen seiner Entriegelungsstellung und seiner Verriegelungsstellung mittels des Betätigungselements erfolgen kann. Die Anordnung des Betätigungselements kann unter Berücksichtigung der jeweiligen Einbauverhältnisse derart gewählt werden, daß dieses ausreichend zugänglich ist. Für dessen Drehbetätigung ist dabei nur ein geringer Bauraum erforderlich.

In den abhängigen Ansprüchen sind vorteilhafte Ausgestaltungen und Weiterbildungen der erfindungsgemäßen Vorrichtung angegeben. Die Merkmale gemäß Anspruch 2 ermöglichen eine einfache Umlenkeinrichtung zur Umwandlung der Drehbwegung des Betätigungselements in die Längsbewegung des Verriegelungselements. Die Merkmale gemäß Anspruch 3 ermöglichen einen Ausgleich der bei einer Drehbewegung des Betätigungselements auftretenden Bewegung senkrecht zur Längsbewegungsrichtung des Verriegelungselements. Durch die Merkmale gemäß Anspruch 5 ist eine sichere Führung des Verriegelungselements erreicht. Im Anspruch 6 ist eine einfache Ausbildung des Verriegelungselements zu dessen Verriegelung am Halteelement angegeben. Die Ausbildung gemäß Anspruch 8 ermöglicht eine einfache und sichere Montage der Beleuchtungseinrichtung.

### Zeichnung

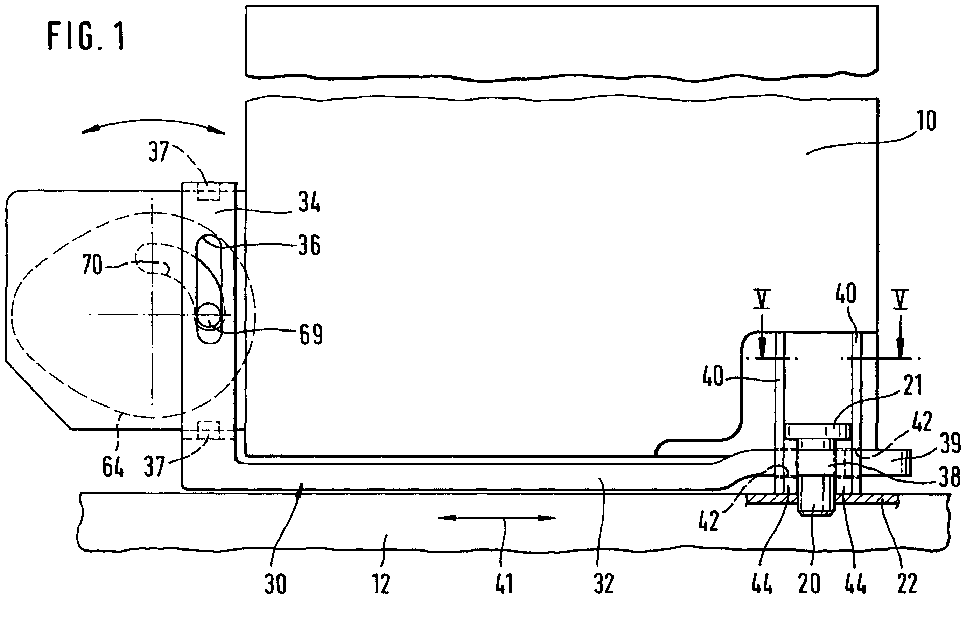

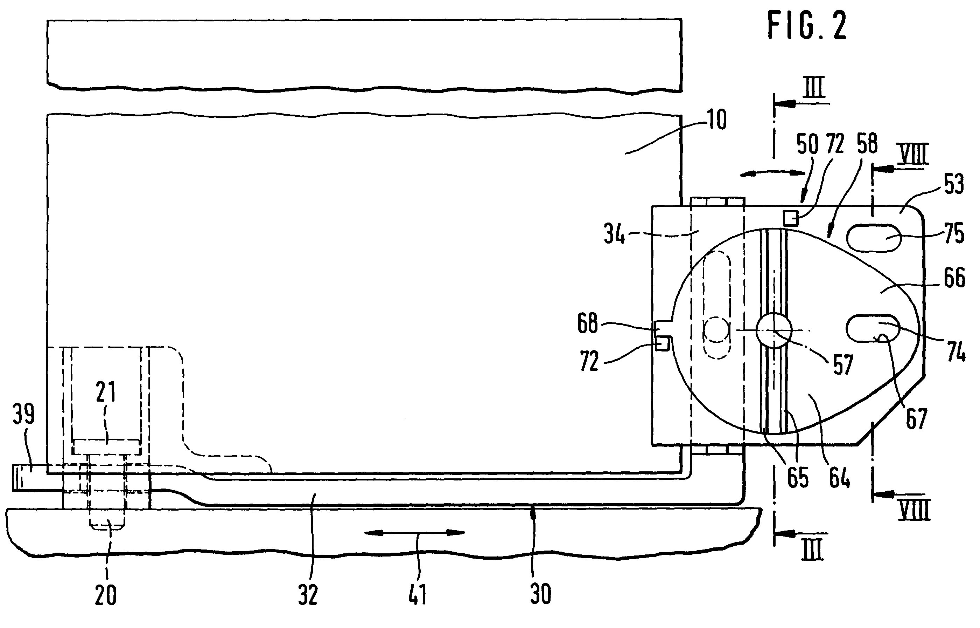

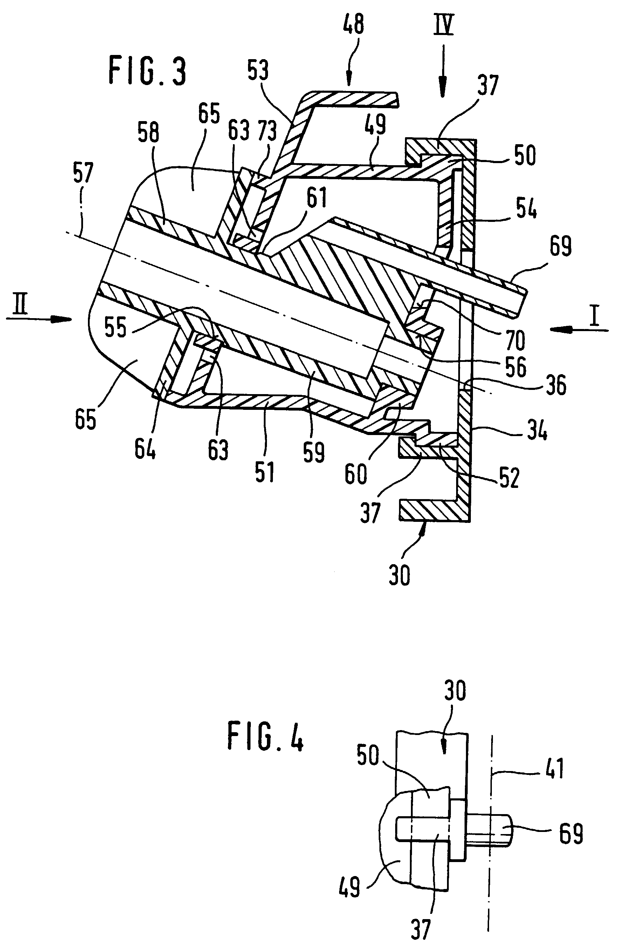

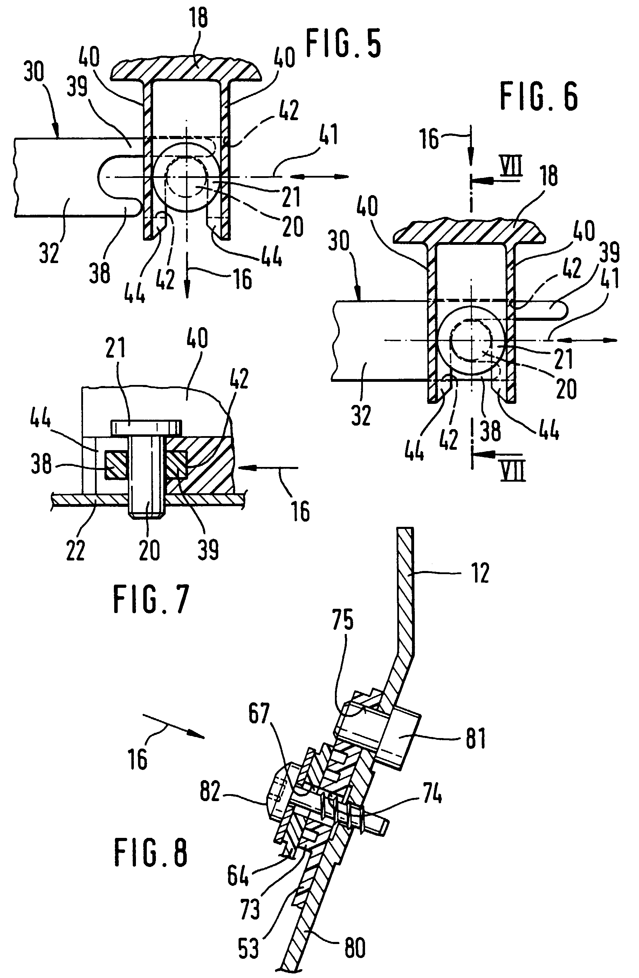

Ein Ausführungsbeispiel der Erfindung ist in der Zeichnung dargestellt und in der nachfolgenden Beschreibung näher erläutert. Es zeigen Figur 1 in vereinfachter Darstellung eine mittels einer Vorrichtung an einem Fahrzeugteil befestigte Beleuchtungseinrichtung in einer Ansicht in Pfeilrichtung I in Figur 3, Figur 2 die Beleuchtungseinrichtung ausschnittsweise in einer Ansicht in Pfeilrichtung II in Figur 3, Figur 3 die Beleuchtungseinrichtung in einem Querschnitt entlang Linie III-III in Figur 2, Figur 4 die Beleuchtungseinrichtung ausschnittsweise in einer Ansicht in Pfeilrichtung IV in Figur 3, Figur 5 die Beleuchtungseinrichtung in einem Längsschnitt entlang Linie V-V in Figur 1 mit einem Verriegelungselement in einer Entriegelungsstellung, Figur 6 die Beleuchtungseinrichtung im Längsschnitt entlang Linie V-V mit dem Verriegelungselement in einer Verriegelungsstellung, Figur 7 die Beleuchtungseinrichtung ausschnittsweise in einem Querschnitt entlang Linie VII-VII in Figur 6 und Figur 8 die Beleuchtungseinrichtung in einem Querschnitt entlang Linie VIII-VIII in Figur 2.

### Beschreibung des Ausführungsbeispiels

In den Figuren 1 bis 8 ist eine Beleuchtungseinrichtung 10 dargestellt, die an einem Fahrzeugteil 12 befestigbar ist. Die Beleuchtungseinrichtung 10 kann ein Scheinwerfer, eine Leuchte oder eine Scheinwerfer-Leuchten-Einheit sein und diese ist insbesondere für Kraftfahrzeuge vorgesehen. Das Fahrzeugteil 12 kann ein Karosserieteil sein oder ein sonstiges Frontteil des Fahrzeugs. Das Fahrzeugteil 12 weist eine Aufnahme für die Beleuchtungseinrichtung 10 auf, in die die Beleuchtungseinrichtung 10 in einer Montagerichtung 16 gemäß den Figuren 5 bis 7 einführbar ist. Die Montagerichtung 16 der Beleuchtungseinrichtung 10 kann beispielsweise von der Vorderseite des Fahrzeugs her entgegen der Fahrtrichtung und etwa parallel zu einer Längsachse des Fahrzeugs sein. Die Beleuchtungseinrichtung 10 kann ein Gehäuse 18 aufweisen, in dem ein oder mehrere Reflektoren sowie diesen zugeordnet ein oder mehrere Lichtquellen angeordnet sein können, die jedoch in den Figuren nicht dargestellt sind.

Am Fahrzeugteil 12 ist an dessen Aufnahme für die Beleuchtungseinrichtung 10 nahe einem seitlichen Rand an deren Unterseite ein Zapfen 20 angeordnet, der etwa vertikal oder geneigt und zumindest annähernd senkrecht zur Montagerichtung 16 der Beleuchtungseinrichtung 10 verläuft. Der Zapfen 20 kann aus Kunststoff oder Metall bestehen und kann einstückig mit dem Fahrzeugteil 12 ausgebildet sein oder als separates Teil mit dem Fahrzeugteil 12 verbunden sein. Beim dargestellten Ausführungsbeispiel ist der Zapfen 20 mit einer etwa horizontal verlaufenden Wandung 22 des Fahrzeugteils 12 verbunden, beispielsweise an seinem einen Ende in diese eingepreßt oder mit dieser verschraubt. An seinem freien Ende weist der Zapfen 20 einen Kopf 21 mit vergrößertem Querschnitt auf.

An der Außenseite des Gehäuses 18 der Beleuchtungseinrichtung 10 ist ein Verriegelungselement 30 angeordnet. Beim dargestellten Ausführungsbeispiel weist das Verriegelungselement 30 wie in den Figuren 1 und 2 dargestellt einen an der Unterseite des Gehäuses 18 über nahezu die gesamte Breite des Gehäuses 18 verlaufenden stangenartigen Abschnitt 32 auf, der einen flachen, beispielsweise etwa rechteckigen Querschnitt aufweist, wobei der Abschnitt 32 derart angeordnet ist, daß dessen größere Erstreckung etwa horizontal ist. Durch diese Anordnung des Abschnitts 32 wird für diesen unterhalb des Gehäuses 18 der Beleuchtungseinrichtung 10 nur eine geringe Bauhöhe benötigt. An einem Ende des Abschnitts 32 des Verriegelungselements 30 schließt sich einstückig mit diesem ein etwa senkrecht zu diesem nach oben verlaufender Abschnitt 34 an. Insgesamt weist das Verriegelungselement 30 somit die Form eines liegenden L auf. Im Abschnitt 34 ist eine in Richtung von dessen Längserstreckung verlaufende längliche Öffnung 36 ausgebildet. Am oberen und unteren Rand des Abschnitts 34 ist wie in Figur 3 dargestellt jeweils ein von diesem abstehender l-förmiger Haken 37 angeformt. Das freie Ende des oberen Hakens 37 verläuft nach unten und das freie Ende des unteren Hakens 37 verläuft nach oben.

Der dem Abschnitt 34 gegenüberliegende Endbereich des Abschnitts 32 des Verriegelungselements 30 ist wie in den Figuren 5 und 6 dargestellt gabelförmig ausgebildet. Die Gabelzinken 38,39 verlaufen zumindest annähernd parallel zur Längserstreckung des Abschnitts 32 und in Montagerichtung 16 mit Abstand zueinander. Die weiter in Montagerichtung 16 angeordnete Gabelzinke 38 ist kürzer ausgebildet als die andere Gabelzinke 39. Der Abschnitt 32 des Verriegelungselements 30 kann zu seinem gabelförmigen Endbereich hin wie in den Figuren 1 und 2 dargestellt eine Kröpfung aufweisen, so daß der gabelförmige Endbereich des Abschnitts 32 etwas höher verläuft als der übrige Bereich des Abschnitts 32. Das Verriegelungselement 30 besteht vorzugsweise aus Kunststoff und ist durch Spritzgießen einstückig hergestellt.

Das Gehäuse 18 der Beleuchtungseinrichtung 10 weist an seiner Rückseite in dem Bereich, in dem das gabelförmige Ende des Verriegelungselements 30 angeordnet ist, wie in den Figuren 5 und 6 dargestellt zwei von diesem mit Abstand in Richtung der Längserstreckung des Abschnitts 32 des Verriegelungselements 30 zueinander abstehende Wandungen 40 auf. Die Wandungen 40 weisen nahe ihren unteren Enden jeweils eine schlitzartige Öffnung 42 auf, durch die das gabelförmige Ende des Verriegelungselements 30 hindurchtritt. Nahe ihren unteren Enden, in dem Bereich, in dem die Öffnungen 42 ausgebildet sind, weisen die Wandungen 40 jeweils eine zueinander gerichtete Verdickung 44 auf, so daß dort der Abstand zwischen den Wandungen 40 verringert ist. Die Verdickungen 44 verjüngen sich in Montagerichtung 16 zu den Enden der Wandungen 40 hin und die Verdickungen 44 sind nahe den entgegen Montagerichtung 16 weisenden, am Gehäuse 18 angeformten Enden der Wandungen 44 miteinander verbunden, wobei die Öffnung zwischen den Wandungen 44 dort u-förmig ausläuft. Das gabelförmige Ende des Verriegelungselements 30 tritt mit geringem Spiel durch die Öffnungen 42 der Wandungen 40 am Gehäuse 18 hindurch, so daß das Verriegelungselement 30 in Richtung der Längsachse 41 der Öffnungen 42 verschiebbar geführt ist. Die Längsbewegungsrichtung des Verriegelungselements 30 ist parallel zur Längsachse 41.

Im Bereich des Abschnitts 34 des Verriegelungselements 30 steht vom Gehäuse 18 wie in Figur 3 dargestellt eine Konsole 48 ab, die eine obere Wandung 49 aufweist, an der eine nach oben weisende, zumindest annähernd parallel zur Längsachse 41 der Öffnungen 42 und somit in Längsbewegungsrichtung des Verriegelungselements 30 verlaufende Leiste 50 ausgebildet ist. Die Konsole 48 weist außerdem eine untere Wandung 51 auf, an der in gleicher Weise eine nach unten weisende Leiste 52 ausgebildet ist. Die Haken 37 des Abschnitts 34 übergreifen jeweils die Leiste 50 bzw. 52, so daß das Verriegelungselement 30 über seine entlang den Leisten 50 bzw. 52 gleitverschiebliche Haken 37 verschiebbar geführt ist. Die Konsole 48 weist außerdem zwei mit Abstand zueinander angeordnete Stirnwandungen 53,54 auf, die wiederum jeweils eine Öffnung 55,56 aufweisen, wobei die Öffnungen 55,56 koaxial zueinander angeordnet sind. Die Öffnung 56 in der dem Abschnitt 34 des Verriegelungselements 30 benachbarten Stirnwandung 54 weist einen kleineren Durchmesser auf als die Öffnung 55 der anderen Stirnwandung 53. In den Öffnungen 55,56 der Stirnwandungen 53,54 ist ein Betätigungselement 58 um die Achse 57 drehbar gelagert, das von der dem Abschnitt 34 abgewandten Seite her in die Öffnungen 55,56 eingeführt ist. Das Betätigungselement 58 weist einen Zapfen 59 auf, der durch die Öffnungen 55,56 gesteckt ist, wobei der Zapfen 59 an seinem vorderen Ende einen kleineren Durchmesser aufweist und dort in einer die Öffnung 56 der dem Abschnitt 34 des Verriegelungselements 30 benachbarten Stirnwandung 54 umgebenden Lagerbuchse 60 gelagert ist. Der zwischen den Stirnwandungen 53,54 liegende Abschnitt des Zapfens 59 weist eine oder mehrere Verdickungen 61 auf, wodurch der Durchmesser des Zapfens 59 dort etwas größer ist als der Durchmesser der Öffnung 55. Die Öffnung 55 ist federnd etwas aufweitbar, was beispielsweise durch eine oder mehrere die Öffnung 55 umgebende Durchbrüche 63 der Stirnwandung 53 erreicht werden kann. Das Betätigungselement 58 weist außerdem einen einstückig am Zapfen 59 angeformten Kopf 64 auf, der gegenüber dem Zapfen 59 einen wesentlich größeren Querschnitt aufweist und der auf der der Stirnwandung 54 abgewandten Seite der Stirnwandung 53 angeordnet ist. Der Kopf 64 des Betätigungselements 58 weist beispielsweise zwei mit Abstand zueinander quer über diesen verlaufende Stege 65 auf, an denen manuell zu einer Verdrehung des Betätigungselements 58 angegriffen werden kann. Der Kopf 64 des Betätigungselements 58 kann einen im wesentlichen runden Querschnitt aufweisen, wobei jedoch ein Umfangsbereich eine nockenförmige Anformung 66 aufweist. Die Anformung 66 weist eine in radialer Richtung als Langloch 67 ausgebildete Öffnung auf. Vom Kopf 64 steht außerdem in radialer Richtung eine Nase 68 hervor. Das Betätigungselement 58 ist in Figur 3 in seiner Entriegelungsstellung dargestellt.

Am zwischen den Stirnwandungen 53,54 angeordneten zapfen 59 des Betätigungselements 58 ist ein exzentrisch zur Drehachse 57 des Betätigungselements 58 angeordneter Finger 69 angeformt. Die Stirnwandung 54 weist neben der Öffnung 56 einen Durchbruch 70 auf, der etwa als Abschnitt eines zur Drehachse 57 koaxialen Kreisbogens ausgebildet ist und durch den der Finger 69 hindurchragt. Der Durchbruch 70 verläuft oberhalb und seitlich neben der Öffnung 56 der Stirnwandung 54 zum Gehäuse 18 hin. Der Finger 69 greift in die Öffnung 36 des Abschnitts 34 des Verriegelungselements 30 ein. Die Öffnung 55 in der Stirnwandung 53 weist eine seitliche Erweiterung für den Durchtritt des Fingers 69 auf. Das Betätigungselement 58 besteht vorzugsweise aus Kunststoff und ist durch Spritzgießen einstückig hergestellt.

Die Stirnwandung 53 der Konsole 48 des Gehäuses 18 weist wie in Figur 1 dargestellt auf ihrer der Stirnwandung 54 abgewandten Seite zwei bezüglich der Drehachse 57 des Betätigungselements 58 unter etwa einem Winkel von 90° zueinander beabstandete Vorsprünge 72 auf. Die Stirnwandung 53 weist an dieser Seite außerdem auch wie in Figur 3 dargestellt einen die Öffnung 55 mit Abstand umgebenden Kragen 73 auf, auf dem der Kopf 64 des Betätigungselements 58 in Richtung der Drehachse 57 aufsitzt. In der Stirnwandung 53 ist seitlich neben der Öffnung 55 etwa im selben radialen Abstand von der Drehachse 57 eine in radialer Richtung als Langloch ausgebildete Öffnung 74 vorhanden wie das Langloch 67 in der Anformung 66 des Kopfes 64 des Betätigungselements 58. Das Langloch 74 ist etwa in horizontaler Richtung seitlich neben der Öffnung 55 angeordnet. Oberhalb des Langlochs 74 ist ein weiteres Langloch in der Stirnwandung 53 vorhanden, das ebenfalls etwa horizontal verläuft.

Das Betätigungselement 58 wird am Gehäuse 18 der Beleuchtungseinrichtung 18 montiert, indem dessen Zapfen 59 durch die Öffnung 55 der Stirnwandung 53 hindurchgesteckt wird, wobei der Finger 69 durch die Querschnittserweiterung der Öffnung 55 hindurchtreten kann. Das Ende des Zapfens 59 tritt durch die Öffnung 56 der Stirnwandung 54 hindurch und in die Lagerbuchse 60 ein. Der Finger 69 tritt durch den Durchbruch 70 hindurch. Beim Durchtritt des Bereichs des Zapfens 59 mit den Verdickungen 61 durch die Öffnung 55 der Stirnwandung 53 wird die Öffnung 55 durch Verformung des Rands der Öffnung in die Durchbrüche 63 hinein federnd aufgeweitet. Wenn die Verdickungen 61 durch die Öffnung 55 hindurchgetreten sind, so federt der Rand der Öffnung 55 wieder zurück und das Betätigungselement 58 ist rastartig an der Stirnwandung 53 gesichert, so daß es nicht wieder in Richtung seiner Drehachse 57 herausgezogen werden kann.

Das Verriegelungselement 30 wird am Gehäuse 18 montiert, indem dessen gabelförmiges Ende in die Öffnungen 42 der Wandungen 40 des Gehäuses 18 eingeführt wird. Die beiden Haken 37 des Verriegelungselements 30 werden über die Leisten 50,52 eingehängt und der Finger 69 des Betätigungselements 58 wird in die Öffnung 36 des Abschnitts 34 des Verriegelungselements 30 eingeführt. Das Verriegelungselement 30 ist dann am Gehäuse 18 in seiner Längsbewegungsrichtung 41 in den Öffnungen 42 und an den Leisten 50,52 verschiebbar geführt. Das Verriegelungselement 30 ist zwischen einer Entriegelungsstellung, das ist eine linke Endstellung gemäß der Darstellung in Figur 1, und einer Verriegelungsstellung, das ist eine rechte Endstellung gemäß der Darstellung in Figur 1, verschiebbar. Eine Verschiebung des Verriegelungselements 30 zwischen seiner Entriegelungsstellung und seiner Verriegelungsstellung in der Längsbewegungsrichtung 41 ist durch eine Verdrehung des Betätigungselements 58 um seine Drehachse 57 ermöglicht, die über den in die Öffnung 36 des Verriegelungselements 30 eingreifenden Finger 69 in die Längsbewegung des Verriegelungselements 30 umgewandelt wird. Die bei einer Verdrehung des Betätigungselements 58 auftretende Bewegung des Fingers 69 in vertikaler Richtung wird durch die als Langloch ausgebildete Öffnung 36 ausgeglichen, in der der Finger 69 in vertikaler Richtung frei verschiebbar ist. In der Stellung des Betätigungselements 58 entsprechend der Entriegelungsstellung des Verriegelungselements 30 befindet sich die Nase 68 von dessen Kopf 64 gemäß Figur 2 im Uhrzeigersinn in Anlage am rechten Vorsprung 72 der Stirnwandung 53 und in der Stellung des Betätigungselements 58 entsprechend der Verriegelungsstellung des Verriegelungselements 30 befindet sich die Nase 68 von dessen Kopf 64 entgegen dem Uhrzeigersinn in Anlage am linken Vorsprung 72 der Stirnwandung 53.

In Figur 5 ist das Verriegelungselement 30 in seiner Entriegelungsstellung dargestellt, in der die längere Gabelzinke 39 zwischen die Wandungen 40 hineinragt, die kürzere Gabelzinke 38 jedoch nicht zwischen die Wandungen 40 hineinragt, so daß zwischen den Wandungen 40 im Bereich von deren Verdickungen 44 eine Öffnung verbleibt. Mit dem in seiner Entriegelungsstellung gemäß Figur 5 angeordneten Verriegelungselement 30 wird die Beleuchtungseinrichtung 10 in Pfeilrichtung 16 in die Aufnahme des Fahrzeugteils 12 eingeschoben. Der am Fahrzeugteil 12 angeordnete Zapfen 20 kann dabei mit geringem Spiel in die Öffnung zwischen den Wandungen 40 im Bereich ihrer Verdickungen 44 eintreten und die Beleuchtungseinrichtung 10 kann in Montagerichtung 16 so weit eingeschoben werden, bis der Zapfen 20 am Rand der Öffnung zwischen den Wandungen 40 oder an der Gabelzinke 39 zur Anlage kommt. Die Wandungen 40 mit den Verdickungen 44 bilden somit eine Aufnahme für den Zapfen 20, der in diese einführbar ist. Die Stirnwandung 53 der Konsole 50 des Gehäuses 18 der Beleuchtungseinrichtung 10 kommt in der Endlage des Gehäuses 18 in Montagerichtung 16 wie in Figur 8 dargestellt an einer Wandung 80 des Fahrzeugteils 12 zur Anlage. An der Wandung 80 ist ein etwa parallel zur Montagerichtung 16 verlaufender Bolzen 81 angeordnet, der in das Langloch 75 der Stirnwandung 53 eintritt, wodurch die Beleuchtungseinrichtung 10 am Fahrzeugteil 12 zentriert wird und außerdem provisorisch gehalten ist. Nachfolgend wird das Betätigungselement 58 gemäß Figur 2 entgegen dem Uhrzeigersinn verdreht, bis dessen Nase 68 am linken Vorsprung 72 der Stirnwandung 53 zur Anlage kommt. Dabei wird das Verriegelungselement 30 in seine Verriegelungsstellung gemäß Figur 5 verschoben, so daß auch dessen kurze Gabelzinke 38 zwischen die Wandungen 40 tritt und den Zapfen 20 hintergreift. Somit ist die Beleuchtungseinrichtung 10 am Zapfen 20 fixiert, der quer zur Montagerichtung 16 in etwa horizontaler Richtung mit geringem Spiel in der Öffnung zwischen den Wandungen 40 im Bereich ihrer Verdickungen 44 fixiert ist und der in und entgegen Montagerichtung 16 durch die diesen umgreifenden Gabelzinken 38,39 des Verriegelungselements 30 fixiert ist. Es kann vorgesehen sein, daß das Gehäuse 18 der Beleuchtungseinrichtunug 10 auf der Wandung 22 des Fahrzeugteils 12 aufsitzt, wobei der Kopf 21 des Zapfens 20 oberhalb des Bereichs der Wandungen 40 mit den Verdickungen 44 angeordnet ist, so daß das Gehäuse 18 auch in Richtung der Längsachse des Zapfens 20 fixiert ist zwischen der Wandung 22 und dem Kopf 21 des Zapfens 20.

In der Drehstellung des Betätigungselements 58 entsprechend der Verriegelungsstellung des Verriegelungselements 30 wie in Figur 2 dargestellt liegt dessen Nase 68 am linken Vorsprung 72 der Stirnwandung 53 an und das Langloch 67 der Anformung 66 des Kopfes 64 des Betätigungselements 58 ist mit dem Langloch 74 der Stirnwandung 53 fluchtend angeordnet. Die Wandung 80 des Fahrzeugteils 12 weist wie in den Figuren 2 und 8 dargestellt im Bereich der Langlöcher 67 und 74 eine Öffnung 81 auf, wobei durch die Langlöcher 67 und 74 ein Befestigungselement 82 in Form einer Schraube, die in die Öffnung 81 eingedreht wird oder eines rastartig in der Öffnung 81 fixierbaren Clips. Durch das Befestigungselement 82 wird das Betätigungselement 58 in seiner der Verriegelungsstellung des Verriegelungselements 30 entsprechenden Drehstellung blockiert, so daß dieses nicht unbeabsichtigt verdreht werden kann. Außerdem wird durch das Befestigungselement 82 auch die Beleuchtungseinrichtung 10 insgesamt am Fahrzeugteil 12 fixiert. Für die Beleuchtungseinrichtung 10 können außerdem noch ein oder mehrere weitere Befestigungspunkte vorgesehen sein, an denen diese mittels bekannter Befestigungselemente wie beispielsweise Schrauben mit dem Fahrzeugteil 12 verbunden wird. Die beiden vorstehend beschriebenen Befestigungspunkte, die durch den Zapfen 20 und das an diesem angreifende Verriegelungselement 30 sowie die mittels des Befestigungselements 82 festgelegte Konsole 48 gebildet sind, sind am unteren Bereich der Beleuchtungseinrichtunug 10 angeordnet. Der wenigstens eine weitere Befestigungspunkt wird vorzugsweise an einem oberen Bereich der Beleuchtungseinrichtung 10 angeordnet werden.

## Patentansprüche

1. Vorrichtung zur Befestigung einer Beleuchtungseinrichtung an einem Fahrzeugteil mit einem am Fahrzeugteil (12) angeordneten Halteelement (20), mit einem an der Beleuchtungseinrichtung (10) angeordneten Verriegelungselement (30), das zwischen einer Entriegelungsstellung und einer Verriegelungsstellung bewegbar ist, wobei die Beleuchtungseinrichtung (10) mit dem Verriegelungselement (30) in seiner Entriegelungsstellung in einer Montagerichtung (16) am Fahrzeugteil (12) ansetzbar ist und nachfolgend zur Befestigung der Beleuchtungseinrichtung (10) am Fahrzeugteil (12) das Verriegelungselement (30) quer zur Montagerichtung (16) in seine Verriegelungsstellung bewegbar ist, in der es am Halteelement (20) des Fahrzeugteils (12) verriegelt ist, dadurch gekennzeichnet, daß an der Beleuchtungseinrichtung (10) ein Betätigungselement (58) drehbar angeordnet ist, das über eine Umlenkeinrichtung (36,69) mit dem Verriegelungselement (30) derart gekoppelt ist, daß eine Drehbewegung des Betätigungselements (58) in eine Längsbewegung des Verriegelungselements (30) zwischen dessen Entriegelungsstellung und dessen Verriegelungsstellung umgewandelt wird.

2. Vorrichtung nach Anspruch 1, dadurch gekennzeichnet, daß die Umlenkeinrichtung (36,69) einen am Betätigungselement (58) exzentrisch zu dessen Drehachse (57) angeordneten Finger (69) aufweist, der mit dem Verriegelungselement (30) in dessen Längsbewegungsrichtung (41) gekoppelt ist.

3. Vorrichtung nach Anspruch 2, dadurch gekennzeichnet, daß das Verriegelungselement (30) eine Aufnahme (36) aufweist, in der der Finger (69) des Betätigungselements (58) senkrecht zur Längsbewegungsrichtung (41) des Verriegelungselements (30) frei verschiebbar ist.

4. Vorrichtung nach einem der Ansprüche 1 bis 3, dadurch gekennzeichnet, daß das Betätigungselement (58) entfernt von dem Bereich des Verriegelungselements (30) angeordnet ist, der am Halteelement (20) des Fahrzeugteils (12) verriegelbar ist.

5. Vorrichtung nach einem der vorstehenden Ansprüche, dadurch gekennzeichnet, daß das Verriegelungselement (30) an der Beleuchtungseinrichtung (10) unter Ermöglichung der Längsbewegung zwischen seiner Entriegelungsstellung und seiner Verriegelungsstellung verschiebbar geführt ist.

6. Vorrichtung nach einem der vorstehenden Ansprüche, dadurch gekennzeichnet, daß das Halteelement (20) als Zapfen ausgebildet ist.

7. Vorrichtung nach einem der vorstehenden Ansprüche, dadurch gekennzeichnet, daß das Verriegelungselement (30) an seinem am Halteelement (20) verriegelbaren Endbereich gabelförmig ausgebildet ist, wobei dessen Gabelzinken (38,39) zumindest annähernd parallel zur Längsbewegungsrichtung (41) des Verriegelungselements (30) und quer zur Montagerichtung (16) der Beleuchtungseinrichtung (10) verlaufen.

8. Vorrichtung nach Anspruch 7, dadurch gekennzeichnet, daß die Beleuchtungseinrichtung (10) eine Aufnahme (40,44) aufweist, in die das Halteelement (20) beim Ansetzen der Beleuchtungseinrichtung (10) in Montagerichtung (16) einführbar ist und in der das Halteelement (20) mit geringem Spiel quer zur Montagerichtung (16) aufgenommen ist.

9. Vorrichtung nach Anspruch 8, dadurch gekennzeichnet, daß der gabelförmige Endbereich (38,39) des Verriegelungselements (30) durch die Aufnahme (40,44) hindurch quer zur Montagerichtung (16) der Beleuchtungseinrichtung (10) verschiebbar geführt ist, wobei durch eine Gabelzinke (38) des Verriegelungselements (30) die Aufnahme (40,44) in dessen Verriegelungsstellung verschlossen wird.

10. Vorrichtung nach Anspruch 8, dadurch gekennzeichnet, daß die weiter in Montagerichtung (16) der Beleuchtungseinrichtung (10) angeordnete Gabelzinke (38) die Aufnahme (40,44) verschließbar ist und daß diese Gabelzinke (38) kürzer ausgebildet ist als die andere Gabelzinke (39).

11. Vorrichtung nach einem der vorstehenden Ansprüche, dadurch gekennzeichnet, daß das Verriegelungselement (30) einen entlang einer Ober- oder Unterseite der Beleuchtungseinrichtung (10) verlaufenden ersten Abschnitt (32), der am nahe einem seitlichen Bereich der Beleuchtungseinrichtung (10) angeordneten Halteelement (20) verriegelbar ist, und einen an dem dem Halteelement (20) gegenüberliegenden seitlichen Bereich der Beleuchtungseinrichtung (10) abgewinkelt zum ersten Abschnitt (32) verlaufenden zweiten Abschnitt (34) aufweist, der mit dem Betätigungselement (58) gekoppelt ist.

12. Vorrichtung nach einem der vorstehenden Ansprüche, dadurch gekennzeichnet, daß das Betätigungselement (58) mittels eines Befestigungselements (82) unverdrehbar fixierbar ist, wobei das Befestigungselement (82) nur in einer Drehstellung des Betätigungselements (58) entsprechend der Verriegelungsstellung des Verriegelungselements (30) montierbar ist.

13. Vorrichtung nach Anspruch 12, dadurch gekennzeichnet, daß durch das Befestigungselement (82) zugleich die Beleuchtungseinrichtung (10) am Fahrzeugteil (12) fixiert wird.
